# EUROPÄISCHE PATENTSCHRIFT

(11) **EP 1 452 381 B1**
(45) Veröffentlichungstag und Bekanntmachung des Hinweises auf die Patenterteilung: **20.09.2006**
(21) Anmeldenummer: 03405067.4
(22) Anmeldetag: 09.02.2003
(51) Int. Cl.: B60K 17/10, F16H 61/40

(54) **Anordnung zur Steuerung einer hydraulischen Antriebsvorrichtung**
Control for a hydraulic drive
Commande pour dispositif de propulsion hydraulique

(43) Veröffentlichungstag der Anmeldung: 01.09.2004
(73) Patentinhaber: Rapid Technic AG, 8953 Dietikon (CH)
(72) Erfinder: Iten, Kilian, 6315 Alosen (CH)
(74) Vertreter: Fenner, Werner

(56) Entgegenhaltungen:
- EP-A- 0 457 913
- CH-A- 689 015
- DE-A- 1 550 904
- DE-A- 2 051 949
- DE-A- 2 604 259
- DE-A- 3 640 640

## Beschreibung

Die Erfindung betrifft eine Anordnung zur Steuerung einer hydraulischen Antriebsvorrichtung einer als Einachstraktor ausgebildeten Arbeitsmaschine, mit wenigstens einem rotierend antreibbaren Motor und einer Pumpe zum Transport eines flüssigen Mediums in Leitungen, welche die Pumpe und den Antriebsmotor in einem Kreislauf des flüssigen Mediums verbinden, wobei ein die Pumpe mit dem Antriebsmotor verbindender, Druckflüssigkeit zu dem Antriebsmotor führender Leitungsabschnitt des Flüssigkeitskreislaufs durch eine erste Steuerleitung mit einem ersten Zylinder eines ersten druckbeaufschlagbaren, durch Federn an dem Boden des ersten Zylinders abgestützten Kolbens und eine Rückflussleitung des Antriebsmotors durch eine zweite Steuerleitung mit einem zweiten Zylinder eines zweiten, mit dem ersten Kolben antriebsverbundenen druckbeaufschlagbaren, durch Federn an dem Boden des zweiten Zylinders abgestützten Kolbens eines dem Antriebsmotor zugeordneten Regelventil verbunden ist, wobei der Leitungsabschnitt ein den Rückfluss sperrendes Rückschlagventil aufweist und dem Antriebsmotor in Strömungsrichtung des flüssigen Mediums eine als Bypass der Rückflussleitung ausgebildete, mit einem den Rückfluss sperrenden Rückschlagventil ausgestatteten Verbindungsleitung nachgeschaltet ist, und mit einer reversierbaren Pumpe und jedem Rad des Einachstraktors zugeordneten Antriebsmotoren, die in Serie in den Flüssigkeitskreislauf geschaltet sind.

Es sind insbesondere hydraulische Fahrantriebe für landwirtschaftliche und kommunale Arbeitsmaschinen, wie beispielsweise Traktoren mit eine Achse für das Ziehen von nachlaufenden Fahrzeugen oder als Geräteträger in der Land- und Kommunalwirtschaft, selbsfahrende Baumaschinen, hydraulische Hubwerke, Hubstapler, Hebebühnen oder dgl., hydraulisch angetriebene Ausleger und Arbeitsgeräte für Baumaschinen, wie beispielsweise Bagger, Schaufellader, Mobilkrane etc. von dieser Anwendung betroffen.

Für die Lenkvorrichtung hydraulischer Fahrantriebe mit einem geschlossenen Kreislauf des flüssigen Druckmediums sind verschiedene Lenkungskonzepte bekannt.
Weit verbreitet ist ein Lenkungssystem für Einachstraktoren, bei dem jedem Rad ein eigener Antriebsmotor zugeordnet ist, sodass unterschiedliche Drehzahlen an den Antriebsmotoren resp. Rädern einstellbar sind.
Bei einer anderen Lenkungsart wird der gesamte Flüssigkeitsstrom über einen Stromteiler den Antriebsmotoren zugeführt.
Eine nach der CH-A-689015 bekannte Anordnung zur Lenkung eines Einachstraktors basiert auf dem Oeffnen und Schliessen angelegter Bypassleitungen, wozu ebenfalls nur eine Verstellpumpe notwendig ist.
Oder es werden vier sogenannte Senkbremsen in Kombination mit Bypassleitungen zur Lenkung einer Achse eingesetzt.

Bei den erwähnten Ausführungen kommt es zu Problemen, wenn die Antriebsmotoren zu Pumpen werden, d.h., die Lastseite beschleunigt wird. Dies geschieht, wenn von aussen ein zusätzliches Drehmoment auf die Antriebswelle einer Arbeitsmaschine einwirkt, beispielsweise bei der Talfahrt eines selbstfahrenden Fahrzeuges und/oder bei einer Verlangsamung des Fahrantriebes resp. der Antriebsvorrichtung durch Verringerung des Volumenstromes einer Pumpe oder Verstellpumpe.

Es kommt zur sog. Kavitation in der Druckleitung zwischen Pumpe und Antriebsmotor/en, weil der zur Pumpe gewordene Antriebsmotor nun einen grösseren Volumenstrom als die Pumpe zu transportieren vermag.
Dieser Umstand kann -wie oben beispielhaft beschrieben- durch Senkbremsventile gelöst werden. Letztere werden an jeder Ausgangs- bzw. Eingangsseite eines Anriebsmotors eingebaut. Für ein selbstfahrendes Fahrzeug mit zwei Antriebsmotoren, das mittels reversierbaren Motoren in zwei Richtungen betrieben werden kann sind also vier Senkbremsventile erforderlich.

Eine weitere Möglichkeit zur Minderung des anstehenden Problems besteht darin, dass der gesamte Hydraulikkreislauf mit einem bestimmten Druck vorgespannt wird.
Beim Konzept mit Bypassleitungen ohne Senkbremsventile kann es nebst der Kavitation unter bestimmten Betriebsumständen auch zu Lenkungseinschränkungen durch einen Umlauf des flüssigen Arbeitsmediums innerhalb des Hydraulikkreislaufs zwischen Antriebsmotor und dem einen Bypass bildenden Lenkventil kommen, wodurch das Lenkvermögen beeinträchtigt wird. Dieser Nachteil ist bekanntlich nur mit Senkbremsventilen zu beheben.
Solche Ausführungen haben hohe Leitungsverluste zur Folge und sind nur teuer zu realisieren.

Die EP-A-0'457'913 vermittelt ein Kreislaufsystem mit einer Hydraulikpumpe für den Fahrantrieb eines Baggers. Gegen Lärm und Kavitation ist eine zusätzliche hydraulische Pumpe vorgesehen, die über eine Ausgleichsventil und Niederdruckmittel aufweisende Leitung an die den Hydraulikmotor mit der Hydraulikpumpe verbindenden Vor- und Rückteitungen des Kreislaufsystems angeschlossen ist

Es stellt sich an die Erfindung die Aufgabe, eine Anordnung zur Steuerung einer hydraulischen Antriebsvorrichtung zu schaffen, bei der die Kavitation in den Leitungen ausbleibt und ein interner Umlauf des flüssigen Arbeitsmedium ausgeschlossen ist.

Erfindungsgemäss wird diese Aufgabe durch die Vorrichtung mit den Merkmalen des Anspruchs 1 gelöst.

Dadurch kann eine kostengünstige, den Wirkungsgrad nicht beeinträchtigende Anordnung zur Steuerung einer hydraulischen Antriebsvorrichtung hergestellt und betrieben werden.
Anschliessend wird die Erfindung unter Bezugnahme auf die Zeichnung, auf die bezüglich aller in der Beschreibung nicht erwähnten Einzelheiten verwiesen wird, anhand eines Ausführungsbeispiels erläutert. In der Zeichnung zeigt:

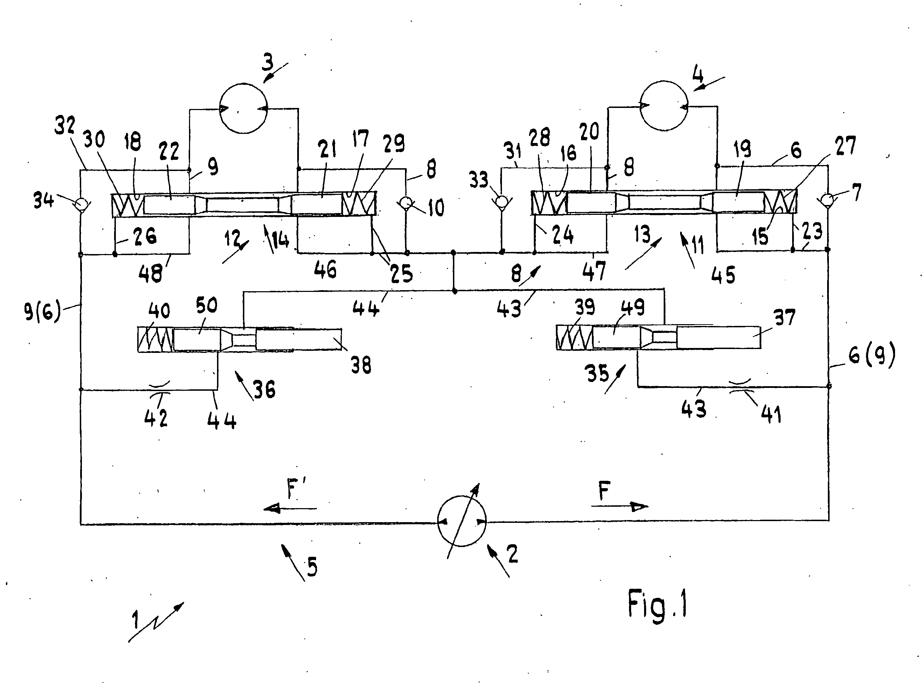

- Fig. 1: eine schematische Darstellung einer Anordnung zur Steuerung einer Antriebsvorrichtung in der Ruhestellung für einen Fahrantrieb einer universell verwendbaren Arbeitsmaschine und
- Fig. 2: die Anordnung gemäss Fig. 1 in einer Betriebsstellung.

Als Antriebsmotoren eignen sich Hydraulikmotoren mit drehbarer Antriebswelle, hydraulisch antreibbare Kolben-Zylinder-Einheiten oder andere hydraulisch antreibbare Organe.
Die Anordnung 1 besteht aus einer Antriebsvorrichtung, die zwei Antriebsmotoren 3, 4 aufweist und die mit einer reversierbaren Verstell- (-wie gezeigt-) oder Konstantstrompumpe 2 leitungsverbunden ist.
Die Arbeitsmaschine weist eine Fahrachse auf, die an jedem Ende mit einem Rad versehen ist. Mit jedem Rad ist ein hydraulischer Antriebsmotor 3, 4 verbunden. Weiterhin besteht die Anordnung aus Leitungsabschnitten, die einen Flüssigkeitskreislauf bilden, in dem die Pumpe 2 und die Antriebsmotoren 3, 4 angeordnet sind.
Ein gemäss Pfeil F als Zuflussleitung ausgebildeter Leitungsabschnitt 6 -der bei einer reversierbaren Pumpe 2 auch als Rückflussabschnitt verwendet werden kann- weist ein Rückschlagventil 7 auf und verbindet die Verstellpumpe 2 mit einem Antriebsmotor 4.
Ein als Abflussleitung von Antriebsmotor 4 ausgebildeter Leitungsabschnitt 8 -bei reversierbarer Pumpe 2 als Zuflussleitung von Antriebsmotor 4 dienend- bildet vorliegend eine Zuflussleitung analog Leitung 6 für einen in Serie geschalteten weiteren Antriebsmotor 3, der seinerseits über einen Rückflussleitungsabschnitt 9 -auch als Zuflussleitungsabschnitt beim Reversieren verwendet- mit der Pumpe 2 verbunden ist und dadurch den Kreislauf der Flüssigkeit schliesst. Dem weiteren Antriebsmotor 3 ist in der Zuflussleitung 8 ebenfalls ein Rückschlagventil 10 vorgeschaltet, welches einen Rückfluss der Druckflüssigkeit verhindert.

Den Antriebsmotoren 3, 4 ist jeweils ein durch Druckbeaufschlagung selbsttätig reagierendes Regelventil 11, 12 zugeordnet.
Jedes Regelventil 11, 12 weist einen beweglichen Schieber 13, 14 auf, der an den Enden durch jeweils einen in einem Zylinder 15 bis 18 resp. flüssigkeitsbeaufschlagbaren Raum geführten Kolben 19 bis 22 ausgebildet ist.
Zylinder 15, 17 der zugehörigen Kolben 19, 21 sind jeweils mit Zuflussleitungen 6, 8 resp. 9 durch eine Steuerleitung 23, 25 verbunden.
Die jeweils gegenüberliegenden Zylinder 16, 18 der Regelventile 11, 12 sind ebenso durch Steuerleitungen 24, 26 an die Abfluss-/Zuflussleitung 8 bzw. an den Rückflussleitungsabschnitt 9 angeschlossen.
Die Kolben 19 bis 22 sind jeweils über Federn 27 bis 30 am Boden eines Zylinders 15 bis 18 abgestützt.
Der vollständigkeitshalber sei auf weitere Verbindungsleitungen 31, 32 hingewiesen, die mit einem gegen die Flussrichtung F wirkenden Rückschlagventil 33, 34 ausgestattet sind, die die gleiche Funktion der Rückschlagventile 7, 12 bei gleicher Anordnung in Flussrichtung F' bzw. bei reversierter Pumpe 2 zur Steuerung der Antriebsmotoren 3, 4 übernehmen.
Jedem Antriebsmotor 3, 4 ist zu dessen Drehzahländerung ein verstellbares Drosselventil 35, 36 zugeordnet.
Im vorliegenden Ausführungsbeispiel sind von Hand betätigbare Drosselventile 35, 36 vorgesehen, mit denen die Antriebsvorrichtung gesteuert wird, beispielsweise die Drehzahl der Räder einer Fahrachse.
Die Drosselventile 35, 36 sind jeweils in Bypassleitungen 43, 44 geschaltet, die einem Antriebsmotor 3, 4 zugeordnet sind, wobei Bypassleitung 43 die Zuflussleitung 6 sowie die Rückfluss-/Zuflussleitung 8 verbindet und Bypassleitung 44 einenends an Zufluss-/Rückflussleitung 8 und anderenends an Rückflussleitung 9 angeschlossen sind.

Weiterhin weisen die Bypassleitungen 43, 44 fest eingestellte Drosseln 41, 42 auf.

Die Drosselventile 35, 36 sind durch eine Doppelkolben-Zylinder-Einheit gebildet, mit der durch den jeweils einen Kolben 49, 50 die Bypassleitung 43, 44 unterbrochen werden kann resp. durch ein mit dem Kolben 49, 50 verbundenes Betätigungsorgan 37, 38 der Kolben 49, 50 in eine Offen- oder eine Sperrstellung der Bypassleitung 47, 48 versetzt werden kann. Das dem Kolben 49, 50 zugewandte Ende des Betätigungsorgans 37, 38, das kolbenartig ausgebildet ist, bildet mit ersterem und dem zugehörigen Zylinder einen Verbindungsraum, der die Leitungsabschnitte 6, 8, 9 jeweils über die Bypassleitung 47, 48 verbindet.

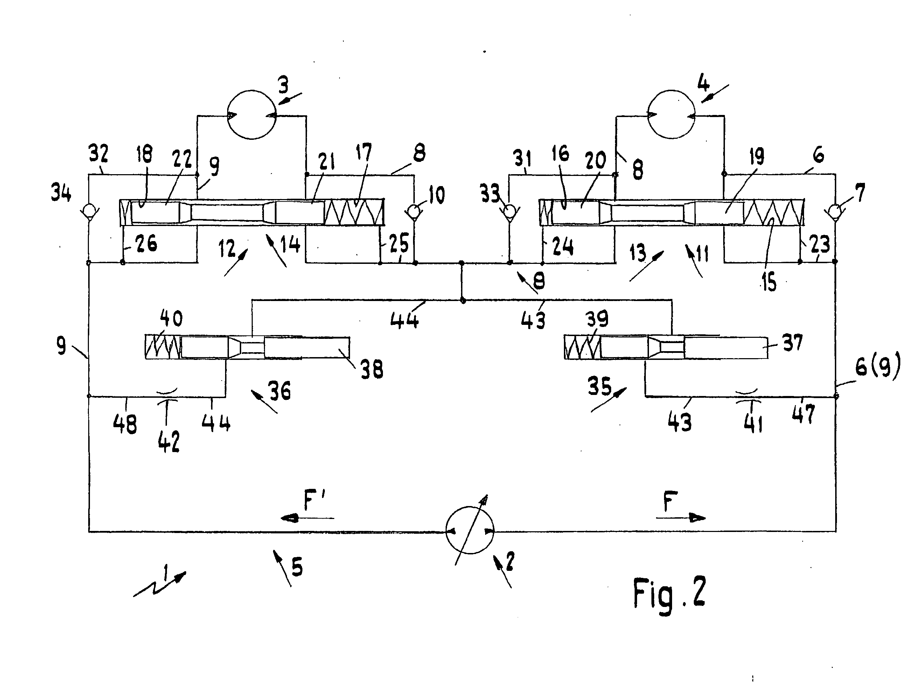

Anschliessend wird die Funktionsweise der steuerbaren Antriebsvorrichtung bei normaler Arbeitslast einerseits und bei von aussen über die Antriebsmotoren resp. die Antriebsvorrichtung zugeführter Antriebsenergie andererseits, beispielweise bei Talfahrt oder bei eingeleiteter Verlangsamung der Fahrgeschwindigkeit einer als Einachstraktors ausgebildeten Arbeitsmaschine beschrieben.
Bei normaler Arbeitslast baut sich bei laufender Pumpe 2 aus der Ruhestellung der Arbeitsmaschine gemäss Fig. 2 ein lastabhängiger Druck in Leitungsabschnitt/Zuflussleitung 6 auf. Gleichzeitig strömt Flüssigkeit über Steuerleitung 23 in Zylinder 15 und verschiebt Schieber 13 derart, dass der Kolben 20 Abfluss-/Zuflussleitung 8 öffnet. Die gleiche Wirkung entsteht bezüglich Regelventil 12. Der Flüssigkeitskreislauf ist über Pumpe 2 wirksam.
Der Lenkvorgang kann nun über die Drosselventile 35, 36 erfolgen, d.h., Drosselventil 35 wirkt ausschliesslich auf Antriebsmotor 4, wogegen Drosselventil 36 Antriebsmotor 3 der Arbeitsmaschine steuert.

Bei Talfahrt entsteht durch das Gefälle der Fahrbahn eine von aussen über die Räder der Arbeitsmaschine zugeführte Antriebsenergie, die die Antriebsmotoren 3, 4 zu Pumpen macht. Dadurch erhöht sich der Druck an der Ausgangsseite der Antriebsmotoren 3, 4, sodass sich der Schieber 13, 14 der Regelventile 11, 12 durch den Druck in der Steuerleitung 24, 26 in Richtung Ruhelage bewegt und einen Druckabfall in Leitung 8, 9 bewirkt.

Die von aussen zugeführte Antriebsenergie wird dabei in Wärme umgewandelt und in den Zuflussleitungen 6, 8 resp. 9 bleibt ein Flüssigkeitsdruck erhalten. Kavitation und interner Umlauf der Flüssigkeit werden ausgeschlossen.
Durch die Drossel 41 bzw. 42 wird zwischen Leitungsabschnitt 6 und 8 resp. 9 bzw. in den Steuerleitungen 23, 24 bzw. 25, 26 ein durchflussabhängiger Druckabfall erzeugt, der verhindert, dass bei grossem Volumenstrom der Schieber 13, 14 des Regelventils 11, 12 gänzlich schliesst, da eine Druckdifferenz in den Steuerleitungen 23, 24 bzw. 25, 26 bei hohen Drücken bestehen bleibt, wird ein Blockieren der Antriebsmotoren 3, 4 verhindert.
Ohne Drossel könnte ein Druckausgleich auf beiden Seiten des Regelschiebers 12, 13 entstehen (in den Steuerleitungen 23, 24; 25, 26) und die Regelschieber 12, 13 würden auch bei hohen Drücken schliessen.

## Patentansprüche

1. Hydraulische Antriebsvorrichtung einer als Einachstraktor ausgebildeten Arbeitsmaschine, mit zwei rotierend antreibbaren Motoren (3, 4) und einer Pumpe (2) zum Transport eines flüssigen Mediums in Leitungen, welche die Pumpe (2) und den jeweiligen Antriebsmotor (3, 4) in einem Kreislauf des flüssigen Mediums verbinden, wobei ein die Pumpe (2) mit dem jeweiligen Antriebsmotor (3, 4) verbindender, Druckflüssigkeit zu dem Antriebsmotor (3, 4) führender Leitungsabschnitt (6, 8) des Flüssigkeitskreislaufs durch eine erste Steuerleitung (23, 25) mit einem ersten Zylinder (15, 17) eines ersten druckbeaufschlagbaren, durch Federn (27, 29) an dem Boden des ersten Zylinders (15, 17) abgestützten Kolbens (19, 21) und eine Rückflussleitung (8, 9) des Antriebsmotors (3, 4) durch eine zweite Steuerleitung (24, 26) mit einem zweiten Zylinder (16, 18) eines zweiten, mit dem ersten Kolben (19, 21) antriebsverbundenen druckbeaufschlagbaren, durch Federn (28, 30) an dem Boden des zweiten Zylinders (16, 18) abgestützten Kolbens (20, 22) eines dem Antriebsmotor (3, 4) zugeordneten Regelventil (11, 12) verbunden ist, wobei der Leitungsabschnitt (6, 9) ein den Rückfluss sperrendes Rückschlagventil (7) aufweist und dem Antriebsmotor (3, 4) in Strömungsrichtung des flüssigen Mediums eine als Bypass der Rückflussleitung (8) ausgebildete, mit einem den Rückfluss sperrenden Rückschlagventil (33) ausgestatteten Verbindungsleitung (31, 32) nachgeschaltet ist, mit einer reversierbaren Pumpe (2) wobei die jedem Rad des Einachstraktors zugeordneten Antriebsmotoren (3, 4) in Serie in den Flüssigkeitskreislauf geschaltet sind, wobei jedem Antriebsmotor (3, 4) ein verstellbares Drosselventil (35, 36) zugeordnet ist, das jeweils in einer einen die Druckflüssigkeit einem Antriebsmotor (3, 4) zuführenden Leitungsabschnitt (6, 8, 9) und einen die Druckflüssigkeit der Pumpe (2) zurückführenden Leitungsabschnitt (6, 8, 9) des Flüssigkeitskreislaufs verbindenden Bypassleitung (43, 44) angeordnet ist.

2. Vorrichtung nach Anspruch 1, **dadurch gekennzeichnet, dass** die Kolben (19, 20, 21,22) jedes Regelventils (11, 12) in der Ruhestellung letzterens jeweils ein den Leitungsabschnitt (6, 8) mit dem Antriebsmotor (3, 4) verbindender Zufluss- (45, 46) resp. Abflussabschnitt (47, 48) sperrend durchsetzen.

3. Vorrichtung nach Anspruche 1 oder 2, **dadurch gekennzeichnet, dass** ein Druckflüssigkeit zu einem Antriebsmotor (3, 4) führender Leitungsabschnitt (6, 8, 9) als Rückflussleitungsab- schnitt (6, 8, 9) schaltbar ist.

4. Vorrichtung nach einem der Ansprüche 1 bis 3, **dadurch gekennzeichnet, dass** die Antriebsmotoren (3, 4) durch Leitungsabschnitt (8) verbunden sind.

5. Vorrichtung nach Anspruch 4, **dadurch gekennzeichnet, dass** jedes Drosselventil (35, 36) zu seiner Verstellung ein Betätigungsorgan (37, 38) aufweist.

6. Vorrichtung nach Anpruch 5, **dadurch gekennzeichnet, dass** das Betätigungsorgan (37, 38) als Kolben einer Kolben-Zylinder-Einheit ausgebildet ist.

7. Vorrichtung nach Anspruch 6, **dadurch gekennzeichnet, dass** ein weiterer, beabstandeter Kolben (49, 50) der Kolben-Zylinder-Einheit als verstellbares Absperrorgan in der Bypassleitung (43, 44) angeordnet ist.

8. Vorrichtung nach einem der Ansprüche 4 bis 7, **dadurch gekennzeichnet, dass** ein Abstand zwischen dem Kolben und dem weiteren Kolben (49, 50) bei geöffnetem Drosselventil (35, 36) einen Verbindungsraum in der Bypassleitung (43, 44) bildet.

9. Vorrichtung nach einem der Ansprüche 4 bis 8, **dadurch gekennzeichnet, dass** in einem Abschnitt (47, 48) der Bypassleitung (43, 44) eine unverstellbare Drossel (41, 42) angeordnet ist.

## Claims

1. Hydraulic drive device for a driven machine designed as a two-wheel tractor, comprising two rotary motors (3, 4) and a pump (2) for conveying a liquid medium in lines connecting the pump (2) and the respective drive motor (3, 4) in a liquid medium circuit, wherein a line section (6, 8) of the liquid circuit connecting the pump (2) to the respective drive motor (3, 4) and conducting hydraulic fluid to the drive motor (3, 4) is connected by means of a first control line (23, 25) to a first cylinder (15, 17) of a first piston (19, 21) which can be pressurised and is supported by means of springs (27, 29) on the bottom of the first cylinder (15, 17) and a return line (8, 9) of the drive motor (3, 4) is connected by means of a second control line (24, 26) to a second cylinder (16, 18) of a second piston (20, 22) of a control valve (11, 12) associated with the drive motor (3, 4), which second piston is operatively connected to the first piston (19, 21), can be pressurised and is supported by means of springs (28, 30) on the bottom of the second cylinder (16, 18), wherein the line section (6, 9) has a non-return valve (7) preventing backflow and a connecting line (31, 32) designed as a bypass of the return line (8) and provided with a non-return valve (33) preventing backflow is connected downstream of the drive motor (3, 4) in the flow direction of the liquid medium, comprising a reversible pump (2), wherein the drive motors (3, 4) associated with each wheel of the two-wheel tractor are connected in series in the liquid circuit and wherein an adjustable throttle valve (35, 36) arranged in a bypass line (43, 44) connecting a line section (6, 8, 9) conducting the hydraulic fluid to a drive motor (3, 4) and a line section (6, 8, 9) of the liquid circuit returning the hydraulic fluid to the pump (2) is associated with each drive motor (3,4).

2. Device according to claim 1, **characterised in that** the pistons (19, 20, 21, 22) of each control valve (11, 12) pass through and thereby close an inlet (45, 46) or outlet section (47, 48) connecting the line section (6, 8) to the drive motor (3, 4) in the rest position of the control valve.

3. Device according to claim 1 or claim 2, **characterised in that** a line section (6, 8, 9) conducting hydraulic fluid to a drive motor (3, 4) can be connected as a return line section (6, 8, 9).

4. Device according to one of claims 1 to 3, **characterised in that** the drive motors (3, 4) are connected by means of the line section (8).

5. Device according to claim 4, **characterised in that** each throttle valve (35, 36) has an actuating element (37, 38) for the adjustment thereof.

6. Device according to claim 5, **characterised in that** the actuating element (37, 38) is designed as the piston of a piston/cylinder unit.

7. Device according to claim 6, **characterised in that** another piston (49, 50) of the piston/cylinder unit is arranged at a distance in the bypass line (43, 44) as an adjustable shut-off element.

8. Device according to one of claims 4 to 7, **characterised in that** a space between the piston and the other piston (49, 50) when the throttle valve (35, 36) is opened forms a connecting space in the bypass line (43, 44).

9. Device according to one of claims 4 to 8, **characterised in that** a non-adjustable throttle (41, 42) is arranged in a section (47, 48) of the bypass line (43, 44).

## Revendications

1. Dispositif de propulsion hydraulique d'une machine de travail réalisée sous la forme d'un tracteur à un essieu, avec deux moteurs (3, 4) pouvant être entraînés en rotation et une pompe (2) pour le transport d'un agent liquide dans des conduites qui relient la pompe (2) et le moteur d'entraînement (3, 4) respectif en un circuit de l'agent liquide, une section de conduite (6, 8) du circuit de liquide reliant la pompe (2) au moteur d'entraînement (3, 4) respectif et conduisant du liquide sous pression au moteur d'entraînement (3, 4) étant reliée par une première conduite de commande (23, 25) à un premier cylindre (15, 17) d'un premier piston (19, 21) pouvant être mis sous pression, s'appuyant sur le fond du premier cylindre (15, 17) par des ressorts (27, 29), et une conduite de retour (8, 9) du moteur d'entraînement (3, 4) étant relié par une deuxième conduite de commande (24, 26) à un deuxième cylindre (16, 18) d'un deuxième piston (20, 22) d'une soupape de régulation (11, 12) associée au moteur d'entraînement (3, 4), relié en entraînement au premier piston (19, 21), pouvant être mis sous pression et s'appuyant sur le fond du deuxième cylindre (16, 18) par des ressorts (28, 30), la section de conduite (6, 9) présentant un clapet anti-retour (7) empêchant le reflux et une conduite de raccordement (31, 32) équipée d'un clapet anti-retour (33) empêchant le reflux, formant une dérivation de la conduite de retour (8), étant placée en aval du moteur d'entraînement (3, 4) dans le sens d'écoulement de l'agent liquide, avec une pompe (2) réversible, les moteurs d'entraînement (3, 4) associés à chaque roue du tracteur à un essieu étant reliés en série dans le circuit de liquide, une soupape d'étranglement réglable (35, 36) qui est disposée chaque fois dans une section de conduite (6, 8, 9) amenant le liquide sous pression à un moteur d'entraînement (3, 4) et dans une conduite de dérivation (43, 44) reliant une section de conduite (6, 8, 9) du circuit de liquide ramenant le liquide sous pression à la pompe (2) étant associée à chaque moteur d'entraînement (3, 4).

2. Dispositif selon la revendication 1, **caractérisé par le fait que** les pistons (19, 20, 21, 22) de chaque soupape de régulation (11, 12), dans la position de repos de cette dernière, traversent en les bloquant chaque fois une section d'amenée (45, 46) respectivement de décharge (47, 48) reliant la section de conduite (6, 8) au moteur d'entraînement (3, 4).

3. Dispositif selon la revendication 1 ou 2, **caractérisé par le fait qu'**une section de conduite (6, 8, 9) conduisant du liquide sous pression à un moteur d'entraînement (3, 4) est commutable en section de conduite de retour (6, 8, 9).

4. Dispositif selon l'une des revendications 1 à 3, **caractérisé par le fait que** les moteurs d'entraînement (3, 4) sont reliés par une section de conduite (8).

5. Dispositif selon la revendication 4, **caractérisé par le fait que** chaque soupape d'étranglement (35, 36) présente un organe de manoeuvre (37, 38) pour son réglage.

6. Dispositif selon la revendication 5, **caractérisé par le fait que** l'organe de manoeuvre (37, 38) est réalisé sous la forme d'un piston d'une unité piston-cylindre.

7. Dispositif selon la revendication 6, **caractérisé par le fait qu'**un autre piston (49, 50), distant, de l'unité piston-cylindre est disposé en tant qu'organe d'arrêt réglable dans la conduite de dérivation (43, 44).

8. Dispositif selon l'une des revendications 4 à 7, **caractérisé par le fait qu'**une distance entre le piston et l'autre piston (49, 50) forme une chambre de communication dans la conduite de dérivation (43, 44) quand la soupape d'étranglement (35, 36) est ouverte.

9. Dispositif selon l'une des revendications 4 à 8, **caractérisé par le fait qu'**un étranglement non réglable (41, 42) est disposé dans une section (47, 48) de la conduite de dérivation (43,44).
